# FASCICULE DE BREVET EUROPEEN

(11) **EP 2 156 600 B1**
(45) Date de publication et mention de la délivrance du brevet: **04.12.2019**
(21) Numéro de dépôt: 08805988.6
(22) Date de dépôt: 12.06.2008
(51) Int. Cl.: H04L 9/08, H04L 9/32, H04L 29/06, H04W 12/04

(54) **PROCÉDÉ DE DISTRIBUTION DE CLÉ D'AUTHENTIFICATION, TERMINAL, SERVEUR DE MOBILITÉ ET PROGRAMMES D'ORDINATEURS CORRESPONDANTS**
VERFAHREN ZUR VERTEILUNG EINES AUTHENTIFIZIERUNGSSCHLÜSSELS, ENTSPRECHENDES ENDGERÄT, MOBILITÄTSSERVER UND ENTSPRECHENDE COMPUTERPROGRAMME
METHOD OF DISTRIBUTING AN AUTHENTICATION KEY, CORRESPONDING TERMINAL, MOBILITY SERVER AND COMPUTER PROGRAMS

(30) Priorité: 14.06.2007 FR 0755769
(43) Date de publication de la demande: 24.02.2010
(73) Titulaire: Orange, 75015 Paris (FR)
(72) Inventeur: KASSAB, Mohamed, 5070 Ksar Hellal (MK) (TN); GUILLOUARD, Karine, F-35135 Chantepie (FR); BONNIN, Jean-Marie, F-35150 Corps Nuds (FR); GRIFFON, Franck, F-45160 Saint Hilaire Saint Mesmin (FR)
(74) Mandataire: Vidon Brevets & Stratégie
(86) Numéro de dépôt international: PCT/FR2008/051053
(87) Numéro de publication internationale: WO 2008/155508

(56) Documents cités:
- EP-A- 1 841 260
- US-A1- 2005 177 723
- US-A1- 2006 083 200
- US-A1- 2007 060 127
- MISHRA A ET AL: "Context caching using neighbor graphs for fast handoffs in a wireless network" INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, vol. 1, 7 mars 2004 (2004-03-07), pages 351-361, XP010740458 ISBN: 0-7803-8355-9
- M.S. BARGH ET AL.: "Fast Authentication Methods for Handovers between IEEE 802.11 Wireless LANs" PROCEEDINGS OF THE 2ND ACM INTERNATIONAL WORKSHOP ON WIRELESS MOBILE APPLICATIONS AND SERVICES ON WLAN HOZSPOTS, 1 octobre 2004 (2004-10-01), pages 51-60, XP002461773 Philadelphia, US

## Description

### 1. domaine de l'invention

Le domaine de l'invention est celui des radiocommunications dans des réseaux cellulaires. Plus précisément, l'invention concerne l'amélioration du passage d'un terminal mobile d'une cellule courante à une cellule voisine, lorsqu'un terminal se déplace à l'intérieur du réseau.

L'invention s'applique par exemple dans le domaine des réseaux à points d'attachements radio de type WiFi, GSM ou encore WiMax.

### 2. art antérieur

Ce mécanisme est généralement désigné à l'aide du terme anglais « handover » qui peut être traduit par « procédure de transfert intercellulaire ».

Selon les techniques classiques, la procédure de « handover » nécessite une phase de négociation entre points d'attachement radio, requérant une phase de découverte des points d'attachement voisins. A ces différentes phases de découvertes s'ajoutent des procédures de gestion de la sécurité du lien établi entre le terminal mobile et le point d'attachement. Par exemple, la nonne IEEE802.11i garantit l'authentification de l'utilisateur (via les procédures IEEE802.1X) et assure la confidentialité des échanges en élaborant des clés d'authentification (également appelé par la suite « matériel ») et des clés de chiffrement. Dans le cadre de la mise en œuvre des procédures IEEE802.1X, les points d'attachement sont appelés des points d'accès.

Une association IEEE802.11i s'effectue en suivant des étapes successives qui ont pour objet une définition de clé « MasterKey » (MK) connue d'un terminal et d'un serveur d'authentification seulement ainsi que d'une clé « Pairwise Master Key » (PMK) qui est créée respectivement par le terminal d'un côté et par le serveur d'authentification de l'autre. Ce dernier la transmet à un point d'accès avec lequel le terminal souhaite mettre en œuvre une communication sécurisée. Une telle communication débute par une authentification mutuelle du terminal et du point d'accès afin de s'assurer qu'ils possèdent la même clé PMK.

Cette procédure d'authentification, déclenchée par le point d'accès correspond à un échange de quatre messages nommé « 4-way handshake » et conduit entre autres à générer les clés de chiffrement « Pairwise Transient Key » (PTK). Cet échange de quatre messages est suivi par l'échange de deux messages, « Group-Key handshake », permettant au terminal d'acquérir la clé de groupe « Group Transient Key » (GTK), requise pour chiffrer les trames diffusées. L'échange réussi conduit le point d'accès à débloquer son port contrôlé IEEE802.1X et le terminal peut émettre et recevoir son trafic de données.

Cependant, la procédure complète normalisée IEEE802.11i conduit à des temps de ré-association relativement longs, de l'ordre de la seconde. De tels temps de réassociation sont incompatibles pour un terminal en situation de mobilité utilisateur de services en temps réel et requérant des temps de latence inférieurs à 50ms (tels que par exemple les services de voix sur IP).

La norme IEEE802.11i autorise cependant des pré-authentifications IEEE802.1X ce qui permet de réaliser cette étape avant un « handover » et de lancer directement l'échange « 4-way handshake » une fois le handover effectué. Cependant de telles pré-authentifications sont néanmoins soumises à des conditions très strictes pour que la norme IEEE802.11i soit respectée.

Des solutions de pré-authentification rapides, préalablement à une procédure de « handover » ont été proposées, notamment dans le document « Fast Pre-Authentication based on Pro-active Key Distribution for IEEE802.11 Infrastructure Networks », par M. Kassab, A. Belghith, J-M. Bonnin, S. Sassi, pour la conférence « WMuNeP 2005: first ACM workshop on wireless multimédia networking and performance modeling, october 13, Montreal, Canada, 2005, Proceedings p.46-53 ». Ces solutions proposent d'optimiser l'étape de ré-association sécurisée entre un terminal et un point d'accès cible par deux solutions différentes, l'une nommée « *PKD with IAPP caching* », l'autre nommée *« PKD with anticipated 4-way handshake »*.

Dans ces deux cas, le principe de ces proposition repose sur l'hypothèse qu'une clé d'authentification « PMK » est créée et connue d'un terminal et du point d'accès auquel le terminal cherche à s'associer, avant la demande d'association (application du procédé « Proactive Key Distribution » de l'anglais « Distribution de Clés Proactive » ou « PKD »).

Le principe du « PKD » consiste en ce qu'une « PMK » ne soit plus négociée entre le terminal et le serveur d'authentification lors de chaque nouvelle demande de réassociation (ce qui augmente le temps nécessaire à la réassociation) mais que cette « PMK » soit créée et transmise au point d'accès cible par le serveur lui-même, sur la base à la fois de la clé « PMK » courante (du point d'accès courant), de l'identité de la station et de celle du point d'accès cible.

L'authentification mutuelle entre le terminal et le point d'accès est ensuite assurée lorsque le terminal et le point d'accès cible exécutent le « 4-way handshake » qui permet de vérifier que le terminal et le point d'accès ont le même matériel de clés « PMK ».

Dans la première solution « *PKD with IAPP caching* », une fois la clé « PMKn » générée et transmise au point d'accès « APn », le procédé « PKD » est « étendu » pour effectuer une pré-distribution des clés « PTK » : une clé de chiffrement « PTK_{T} » correspondant au point d'accès cible est générée de façon récurrente par le point d'accès courant d'un côté et par le terminal d'un autre côté, à partir des « PMK » et « PTK » courantes, de l'identité du terminal et de celle du point d'accès cible.

Le choix d'une telle relation entre les entités est arbitraire. Cependant l'utilisation de la « PTK » courante limite la durée de vie de la clé « PTK_{T} » générée par cette relation et l'utilisation de la clé « PMK » courante par le point d'accès courant prouve la confiance réciproque entre ce point d'accès et le serveur d'authentification (en effet, ce dernier doit prouver que la clé a été générée par un point d'accès de confiance, à savoir le point d'accès courant). Ceci renforce la robustesse de la relation par rapport à une relation n'exploitant que la « PTK » courante.

En outre, seul le point d'accès courant et le terminal sont capables de générer cette nouvelle clé « PTK_{T} ». C'est le point d'accès courant qui est alors chargé de transmettre cette nouvelle « PTK_{T} » au point d'accès cible via un lien sécurisé entre les deux points d'accès. Seuls le terminal, le point d'accès courant et le point d'accès cible peuvent utiliser cette « PTK_{T} ».

Ainsi, seule la création de la clé de groupe « GTK » reste à effectuer lors de l'association entre le terminal et le point d'accès cible, ce qui permet de réduire l'étape d'association en supprimant l'échange des quatre messages du « 4-way handshake ». L'utilisation de la PTK courante pour générer le « PTK_{T} » cible permet de transférer temporairement la confiance établie entre le terminal et le point d'accès courant au point d'accès cible.

La deuxième solution *« PKD with anticipated 4-way handshake »* est une solution alternative pour réduire le temps d'association en réalisant l'étape de « 4-way handshake » avec le point d'accès cible via le point d'accès courant de façon anticipée. Cela signifie que dès que le terminal a la connaissance de son point d'accès cible, il effectue une authentification mutuelle avec celui-ci, avant d'effectuer le « handover ». L'étape d'association avec le point d'accès cible ne comprend plus alors que le « Group-Key handshake ».

Ces deux solutions présentent néanmoins des inconvénients.

Dans un premier temps, la procédure « PKD with IAPP caching » conduit à ce qu'un point d'accès courant connaisse la « PTK_{T} » d'un point d'accès cible d'un terminal.

Or, ceci n'est pas conforme à la norme IEEE802.11i. En effet, si le point d'accès courant est compromis, la « PTK_{T} » peut être transmise à des terminaux et/ou points d'accès malveillants. Par ailleurs, le matériel « PMK » n'est pas exploité par le point d'accès cible, la procédure ne conduit qu'à une authentification mutuelle temporaire entre le point d'accès cible et le terminal, assurée par l'exécution du « Group-Key handshake ». Par conséquent, dès que le terminal est associé au nouveau point d'accès, une authentification mutuelle standard doit être exécutée conduisant à la vérification mutuelle de l'identité en prouvant la possession d'une « PMK » identique et à la création d'une nouvelle clé « PTK_{T1} ».

De plus, d'après la procédure de création de la « GTK », une solution alternative qui consisterait en ce qu'un point d'accès cible « APn » et le terminal génèrent eux-mêmes la « PTK_{T} », à partir de « PMKn », de l'identité du terminal et de l'identité du point d'accès cible, ne serait pas satisfaisante car alors l'exécution du « Group-Key handshake » ne suffirait pas à assurer une authentification mutuelle entre le nouveau point d'accès et le terminal, pour vérifier la possession de clé « PMKn » identique.

La procédure *« PKD with anticipated 4-way handshake »* quant à elle oblige à établir un échange de plusieurs messages entre le terminal et son point d'accès cible via le point d'accès courant. Cet échange doit donc se faire en parallèle des échanges de données établis avec le point d'accès courant. Le bon déroulement dépend alors de la charge du point d'accès courant et du délai laissé au terminal avant l'exécution du « handover ».

Le document US 2007/060127 décrit un procédé dont l'objectif est de faciliter et accélérer le « handover » dans un réseau cellulaire en réalisant une pré-authentification tout en réduisant l'usage des ressources. Dans ce procédé, un contexte de clés de session (SKC), comprenant des clés de session (SK), est distribué à des points d'attachement.

Les principaux inconvénients des techniques antérieures peuvent être résumés ainsi :
- il y a nécessité de maintenir des informations ou des contextes dans des caches au niveau des routeurs ou points d'accès, sans savoir à l'avance si les données seront effectivement utilisées ou non ;
- lorsque le matériel d'authentification (de type « MK » ou « PMK ») est distribué à l'avance, la procédure d'authentification mutuelle entre le terminal et le point d'accès et d'établissement de clés de chiffrement (de type « 4-way handshake ») reste à exécuter. Cette procédure représente un minimum de quatre messages à échanger entre le terminal et le point d'accès cible. Ainsi, lorsqu'elle est effectuée de façon réactive (c'est à dire une fois que le « handover » a débuté), elle conduit à un délai d'association supplémentaire non négligeable ; Lorsqu'elle est effectuée de façon pro-active (c'est-à-dire avant le « handover »), elle risque de ne pas aboutir puisque elle est alors exécutée en parallèle des communications de données établies avec le point d'accès courant, dont on ne connaît pas la charge ;
- ces techniques reposent également sur l'hypothèse contraignante qu'un lien sécurisé préétabli existe entre le point d'accès courant et le point d'accès cible. Une supposition de la sorte conduit à des configurations complexes où une connexion sécurisée est requise entre deux points d'accès potentiellement voisins. A priori, il est donc nécessaire que tout point d'accès connaisse ses points d'accès voisins et que cette information soit également connue du terminal.

### 3. résumé de l'invention

L'invention est définie par les revendications indépendantes. Elle propose une solution nouvelle qui permet de résoudre ces inconvénients de l'art antérieur, sous la forme d'un procédé de distribution anticipée d'au moins une clé de chiffrement destinée à sécuriser une communication à établir sur la couche de liaison d'un réseau cellulaire formé d'une pluralité de cellules contrôlées chacune par un point d'attachement, entre un terminal mobile et un ensemble de points d'attachement, dit points d'attachement cibles.

Selon l'invention, un tel procédé comprend, pour au moins un point d'attachement cible, les étapes suivantes :
- création d'un ticket de chiffrement contenant une clé de chiffrement, crypté à partir d'au moins une clé d'authentification propre à ce point d'attachement cible ;
- réception dudit ticket de chiffrement crypté, par l'intermédiaire d'un point d'attachement courant auquel ledit terminal mobile est connecté ;
- identification d'un moyen de décrypter ledit ticket de chiffrement crypté, à l'aide de ladite au moins une clé d'authentification, permettant d'obtenir ladite clé de chiffrement.

Ainsi, l'invention permet de réaliser une sécurisation préalable d'une communication à venir entre un terminal et un point d'attachement cible auquel ce terminal est susceptible de se connecter, sans que le point d'attachement courant, qui est le point par lequel le ticket transite avant d'atteindre le point d'attachement cible, n'ait connaissance des informations cryptographiques privées du point d'attachement cible. En effet, selon des techniques de l'art antérieur, qui visent à réduire le temps nécessaire à un changement de cellule du terminal, les informations cryptographiques privées des points d'attachement cibles transitent en « clair » par le point d'attachement courant. Or, si ce point d'attachement est corrompu ou piraté, ces informations peuvent être exploitées de façon malveillante. L'invention permet notamment de pallier cet inconvénient en chiffrant ces informations privées avant qu'elles ne transitent par le point d'attachement courant. De plus, l'invention augmente le niveau de sécurité global des transactions intervenant entre le terminal mobile et le point d'attachement cible en laissant à ce seul point d'attachement cible la tâche d'identifier le moyen nécessaire au décryptage du ticket de chiffrement. Par exemple, dans un mode de mise en œuvre particulier de l'invention, adapté à la norme IEEE 802.11i, le point d'attachement cible peut utiliser l'élément d'information « RNS » qui est intégré dans certaines trames de gestion et qui permet aux terminaux et aux points d'attachement d'indiquer leurs capacités de gestion des politiques de sécurité aux pairs avec lesquels ils souhaitent communiquer.

Selon un mode de réalisation particulier de l'invention, ledit procédé comprend en outre une étape de stockage, par ledit point d'attachement cible, dudit ticket de chiffrement reçu, au sein d'un espace spécifique, selon un paramètre de conservation prédéterminé.

Ainsi, le procédé de distribution de l'invention permet de conserver, au sein des points d'attachement cibles, le ticket de chiffrement reçu et permettant à chaque point d'attachement d'établir une communication sécurisée de niveau liaison avec le terminal quand celui-ci change de point d'attachement. Ce stockage est géré selon un paramètre de conservation prédéterminé pour permettre une administration efficace de celui-ci, notamment vis-à-vis d'éventuelles contraintes de sécurité, ou de contraintes temporelles.

Selon une caractéristique particulière de l'invention, ledit procédé comprend une étape préalable de détermination dudit ensemble de points d'attachements cibles par l'intermédiaire d'un graphe de voisinage associé audit réseau cellulaire.

Ainsi, seuls les points d'attachement qui font partie des cibles potentielles pouvant être atteintes par le terminal au cours de son déplacement font l'objet d'une distribution anticipée de clé de chiffrement et d'authentification. Une telle détermination préalable de l'ensemble permet d'éviter de distribuer par la suite de l'information à des points d'attachement qui n'en n'ont pas le besoin.

Selon un mode de réalisation particulier de l'invention, ledit ticket de chiffrement est créé par ledit terminal et ledit ticket de chiffrement comprend en outre une première information représentative d'un identifiant dudit terminal.

Ainsi, lors de la réception du ticket de chiffrement, le point d'attachement cible est à même de déterminer de quel terminal ce ticket de chiffrement provient. L'invention permet donc d'éviter une usurpation d'identité de terminal en associant directement la clé de chiffrement à un terminal donné au sein du ticket.

Selon un mode de réalisation particulier de l'invention, ledit ticket de chiffrement est créé par ledit point d'attachement cible et ledit ticket de chiffrement comprend en outre une première information représentative d'un identifiant dudit terminal.

Ainsi, un tel mode de réalisation permet au réseau de maîtriser à la fois le choix des clés de chiffrement et le moyen de création des tickets de chiffrement. Ces caractéristiques peuvent être importantes pour un opérateur.

Selon un mode de réalisation particulier de l'invention, ledit procédé comprend en outre une étape préalable de transmission, pour chaque point d'attachement cible, d'une deuxième information représentative d'une possible mise en œuvre d'une procédure de « handover » à partir dudit terminal mobile.

Ainsi, l'invention permet de préparer les points d'attachement qui peuvent faire l'objet d'une mise en œuvre d'une procédure de « handover ». Une telle préparation permet au point d'attachement cible, par exemple, de réserver des ressources préalablement à cette mise en œuvre afin notamment de l'accélérer.

Selon une caractéristique particulière de l'invention, caractérisé en ce que ladite deuxième information comprend au moins une donnée appartenant au groupe comprenant :
- une identité dudit terminal ;
- une information représentative d'un matériel d'authentification propre audit terminal.

Ainsi, le point d'attachement cible sait à l'avance quel va être le terminal susceptible de s'attacher et/ou possède le matériel d'authentification propre à ce terminal, par exemple sous la forme d'une « Primary Master Key » (clé primaire) permettant de générer les données d'identification nécessaires. Il n'est donc pas possible de provoquer l'attachement d'un terminal qui n'aurait pas été annoncé au point d'attachement cible. On augmente par ce biais le niveau de sécurité de l'ensemble de la procédure d'échange.

Selon une caractéristique particulière de l'invention, ledit procédé comprend une étape de sauvegarde temporaire de ladite deuxième information jusqu'à la mise en œuvre de ladite procédure de « handover ».

Ainsi, le point d'attachement est toujours à même de connaître l'identité ou de disposer du matériel d'authentification nécessaire à l'attachement du terminal.

Selon un mode de réalisation particulier de l'invention, ledit procédé comprend une étape de suppression de ladite deuxième information lorsqu'une durée limite de sauvegarde de ladite deuxième information est atteinte.

Ainsi, on réduit les risques d'usurpation d'identité en ne donnant aux informations identifiant le terminal qu'une durée de vie limitée. Ainsi, si le terminal n'a pas entamé une procédure de « handover » dans le temps qui lui était imparti pour le faire, il ne peut plus réaliser celle-ci avec les informations qui étaient disponibles au niveau du point d'attachement cible. Une nouvelle distribution est nécessaire au point d'attachement cible pour que l'authentification du terminal puisse avoir lieu et que la procédure de « handover » soit effectuée. Bien entendu, cette nouvelle distribution peut avoir lieu par le biais du procédé de distribution objet de l'invention.

L'invention concerne également un système de distribution anticipée d'au moins une clé de chiffrement destinée à sécuriser une communication à établir sur la couche de liaison d'un réseau cellulaire formé d'une pluralité de cellules contrôlées chacune par un point d'attachement, entre un terminal mobile et un ensemble de points d'attachement, dit points d'attachement cibles,

Selon l'invention, un tel système comprend, pour au moins un point d'attachement cible :
- des moyens de création d'un ticket de chiffrement contenant une clé de chiffrement, crypté à partir d'au moins une clé d'authentification propre à ce point d'attachement cible ;
- des moyens de réception dudit ticket de chiffrement crypté, par l'intermédiaire d'un point d'attachement courant auquel ledit terminal mobile est connecté ;
- des moyens d'identification d'un moyen de décrypter ledit ticket de chiffrement crypté, à l'aide de ladite au moins une clé d'authentification, permettant d'obtenir ladite clé de chiffrement.

Dans un tel système, ces moyens de création peuvent être inclus au sein d'un terminal de communication mobile et les moyens de réception être situés au sein du point d'attachement cible. Les moyens d'identification, sont mis en œuvre par le point d'attachement cible. Dans un autre mode de réalisation du système, ces moyens de création peuvent être situés au niveau du point d'attachement cible et les moyens de réception situés au niveau du terminal mobile. Les moyens d'identification, sont alors mis en œuvre par le terminal mobile.

Dans un autre mode de réalisation, l'invention concerne un dispositif apte à intervenir au sein d'un système de distribution anticipée d'au moins une clé de chiffrement destinée à sécuriser une communication à établir sur la couche de liaison d'un réseau cellulaire formé d'une pluralité de cellules contrôlées chacune par un point d'attachement, entre un terminal mobile et un ensemble de points d'attachement, dit points d'attachement cibles.

Selon l'invention, un tel dispositif comprend des moyens de création d'un ticket de chiffrement contenant une clé de chiffrement, crypté à partir d'au moins une clé d'authentification propre à ce point d'attachement cible.

Dans un mode de réalisation particulier, un tel dispositif peut se présenter sous la forme d'un terminal de communication qui est apte à transmettre et recevoir des informations au sein d'un réseau cellulaire composé d'une pluralité de cellules.

L'invention concerne également un point d'attachement apte à intervenir au sein d'un système de distribution anticipée d'au moins une clé de chiffrement destinée à sécuriser une communication à établir sur la couche de liaison d'un réseau cellulaire formé d'une pluralité de cellules contrôlées chacune par un point d'attachement, entre un terminal mobile et un ensemble de points d'attachement, dit points d'attachement cibles

Selon l'invention, un tel point d'attachement comprend des moyens de réception d'un ticket de chiffrement contenant une clé de chiffrement, crypté à partir d'au moins une clé d'authentification propre audit point d'attachement, par l'intermédiaire d'un point d'attachement courant auquel ledit terminal mobile est connecté.

Selon un mode de réalisation particulier de l'invention, ledit point d'attachement comprend des moyens d'identification d'un moyen de décrypter ledit ticket de chiffrement crypté reçu, à l'aide de ladite au moins une clé d'authentification, permettant d'obtenir ladite clé de chiffrement.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de distribution anticipée tel que décrit précédemment.

### 4. liste des figures

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- la figure 1A est un diagramme d'utilisateur simplifié du procédé de l'invention ;
- la figure 1B un diagramme d'utilisateur simplifié de la réassociation d'un terminal suite à l'exécution du procédé selon l'invention ;
- la figure 2 illustre un réseau de campus mettant en œuvre un mode de réalisation du procédé de la figure 1 ;
- la figure 3 est un exemple de disposition d'un ensemble de points d'attachement d'un sous réseau de la figure 2, au sein d'un bâtiment ainsi que le graphe de voisinage correspondant ;
- la figure 4 est un arbre de création et de distribution anticipée des clés de chiffrement correspondant à un déplacement d'un terminal dans le réseau de la figure 3 ;
- la figure 5 est un diagramme d'utilisateur présentant les interactions entre un terminal et le premier point d'attachement auquel il se connecte ;
- la figure 6 est un diagramme d'utilisateur présentant les interactions entre un terminal et les points d'attachement cibles lors d'un déplacement du terminal tel qu'illustré en figure 4 ;
- les figures 7A et 7B illustrent schématiquement les structures d'un point d'attachement et d'un terminal respectivement, mettant en œuvre un mode de réalisation de l'invention.

### 5. description d'un mode de réalisation préférentiel de l'invention

### définition des sigles utilisés

On utilise dans la présente description les sigles et définitions suivants :
- APn : n^{ième} point d'attachement auquel s'associe le terminal en situation de mobilité ;
- APn_id : identifiant du point d'attachement APn, pouvant par exemple être l'adresse MAC (machine) du point d'attachement ;

- MN_id : identifiant du terminal, pouvant par exemple être l'adresse MAC du terminal ;
- PMKn : clé d'authentification correspondant au point d'attachement « n », dans la description ci-dessous correspond au point d'attachement cible ;
- PMKn-1 : clé d'authentification correspondant au point d'attachement « n-1 », qui est également, dans la description ci-dessous, appelé point d'attachement courant ;
- PRF : fonction aléatoire non réversible (de l'anglais « Pseudo Random Function ») utilisée pour générer les clés de chiffrement ;
- Snonce : valeur aléatoire créée par le terminal ou par le point d'attachement cible. Cette valeur est créée par l'entité qui crée la clé de chiffrement et le ticket crypté ;
- handover : procédure de transfert intercellulaire.

### 5.2 principaux aspects de l'invention

L'invention propose donc une approche nouvelle, qui permet de distribuer, de manière anticipée, des clefs de chiffrement cryptées aux points d'attachement cibles et d'établir par la suite une communication sécurisée au niveau de la couche liaison (couche deux du modèle OSI) entre le terminal en situation de mobilité et le point d'attachement cible préalablement à l'ouverture d'une communication sécurisée au niveau de la couche trois (couche réseau).

En d'autres termes, l'invention permet de répondre à la problématique de la mise en place d'une procédure d'échange de clés de chiffrement directement entre un terminal et son point d'attachement cible, lorsque le terminal est en situation de mobilité, par des mécanismes qui soient sécurisés et rapides, permettant par exemple le maintien de l'exécution d'une application temps réel.

La solution apportée par l'invention consiste à créer la clé de chiffrement avant l'identification d'un besoin de « handover », de crypter cette donnée, par l'intermédiaire du terminal selon un premier mode de réalisation ou par l'intermédiaire du point d'attachement cible selon un deuxième mode de réalisation, avec le matériel (les clés d'authentification de type « PMK ») connu uniquement du terminal et du point d'attachement cible, sans avoir à échanger des clés de plus haut niveau de type « MK » ou « PMK », c'est-à-dire sans qu'il soit nécessaire de prévoir des architectures de sécurisation de liaisons entre les points d'attachement du réseau.

Ainsi, l'attachement au réseau est sécurisé (par le fait que les données échangées soient cryptées) dès l'association au niveau liaison (couche deux), sans attendre l'établissement d'une connectivité réseau (couche trois) entre le terminal et le réseau.

Selon le deuxième mode de réalisation, le matériel de chiffrement complet (par exemple de type « PTK ») est créé et transmis au terminal concerné par le point d'attachement cible lui-même par le biais du point d'attachement courant, toujours de manière sécurisée, c'est-à-dire que ce matériel est crypté avec des données dont seul le terminal et le point d'attachement cible ont connaissance.

En fonction du mode de mise en œuvre de l'invention, la création du ticket peut donc être réalisée au sein du terminal ou au sein du point d'attachement. La réception du ticket de chiffrement sera effectuée par le point d'attachement cible si le terminal a créé le ticket. La réception du ticket de chiffrement sera effectuée par le terminal si le point d'attachement cible a créé le ticket.

Ainsi, dans le cas où le ticket est créé par le terminal mobile :
- Lorsque le terminal s'associe à son point d'attachement courant, il obtient une liste de points d'attachement cibles potentiels, par exemple par le biais d'un système de gestion centralisé pouvant transmettre ce type d'information. Ce qui précède est utile lorsque c'est le terminal qui crée le ticket de chiffrement. Si c'est un point d'attachement cible qui se charge de cette création, il faut que le serveur indique à chacun des points d'attachement cibles potentiels qu'il constitue une cible possible et par conséquent qu'il doit générer un ticket de chiffrement à destination du mobile.
- Une liste de tickets de sécurité associée à la liste de points d'attachement précédemment générée est créée. Chaque ticket, associé à un point d'attachement cible spécifique de la liste, consiste en un contexte de chiffrement crypté correspondant à ce point d'attachement. Cette liste est obtenue de la façon suivante :
   Pour chaque point d'attachement cible de la liste APn :
   - Création d'une clé de chiffrement :
      ▪ PTKn=PRF(PMKn,Snonce,APn_id,MN_id)
   - Ticketn = (MN_id,PTKn)c = (MN_id,PTKn) crypté avec une clé connue du point d'attachement cible seul (par exemple PMKn)
   - Liste = {APn_id, SeqNumb, Ticketn}= liste des couples (AP_id, ticket), chacun des tickets étant spécifique à un point d'attachement de la liste. Le champ « SeqNumb » est spécifique au point d'attachement cible et est destiné au point d'attachement courant pour éviter des attaques par retransmission.
- La liste de tickets est transmise au point d'attachement courant de façon sécurisée (liste chiffrée avant envoi) ;
- Dans un mode de réalisation particulier de l'invention, cette liste peut être maintenue dans le cache du point d'attachement courant. Selon un mode de réalisation particulier de l'invention, on sécurise le procédé en imposant une durée de vie aux tickets au niveau des points d'attachement cibles.
   Ainsi, après expiration d'un ticket, le point d'attachement cible aura besoin qu'un nouveau ticket soit créé et non une copie provenant du cache de tickets du point d'attachement courant de celui qu'il détient déjà ;
- Le point d'attachement courant retransmet à chacun des points d'attachement de la liste, le ticket et l'identité du terminal correspondants, par l'intermédiaire, par exemple d'un lien sécurisé ; selon le deuxième mode de réalisation, le point d'attachement courant fait parvenir la liste des tickets générés par tous les point d'attachement cibles au terminal.
- Chaque point d'attachement de la liste peut également créer un second cache associant l'identité du terminal et le ticket reçu, en indiquant optionnellement une durée de validité de ces entrées. Si la clé utilisée par le terminal pour crypter est connue du point d'attachement cible, celui-ci peut dès ce moment décrypter le Ticketn et extraire la PTKn correspondant au terminal.
   - pour qu'un tel décryptage soit possible, dans un mode de réalisation particulier de l'invention (norme IAPP), on propose que la clé utilisée pour crypter le ticket soit déterminée directement à partir de la connaissance de la méthode d'authentification. En effet, la méthode d'authentification est annoncée dans le champ « RSN IE » renseigné par le terminal dans les trames « association-req » au point d'attachement courant. Le champ « RSN IE » est utilisé par les points d'attachement pour indiquer aux mobiles la méthode d'authentification ou de ré-authentification à utiliser.
      Selon un mode de réalisation particulier, un identifiant relatif à la méthode de ré-authentification est préalablement défini. Cet identifiant est reconnu par toutes les entités qui supportent la présente méthode. Il n'est donc pas nécessaire d'échanger la valeur de ce champ entre les points d'attachement.
      Dans un mode de réalisation particulier de l'invention, lorsque le point d'attachement courant reçoit un ticket pour un point d'attachement cible, le point d'attachement courant renvoie le ticket au point d'attachement cible et le renseigne en même temps sur la valeur du champ « RSN IE » correspondant au terminal concerné. A partir de cette valeur, le point d'attachement cible détermine la méthode d'authentification utilisée par le terminal et en déduit la clé utilisée (par ex. PMKn). Le terminal effectue une opération identique lorsqu'il n'est pas le créateur du ticket et qu'il doit identifier le moyen de décryptage ;
- Lors de sa ré-association avec le point d'attachement cible, le terminal lui envoie une trame « reassociation-req », incluant optionnellement un champ permettant au point d'attachement cible de déterminer la façon de décrypter le ticket précédemment transmis (il est proposé dans certains mode de mises en œuvre que ce champ soit le champ « RSN IE » renseigné par le terminal dans la trame « association-req ») et le champ standard indiquant l'ancien point d'attachement. Cette option est utile si le précédent point d'attachement n'a pas le moyen de transmettre au point d'attachement cible cette information.
- A partir de l'identité du terminal transmise via « reassociation-req » et de la méthode de pré-authentification, le point d'attachement cible identifie, s'il ne la pas encore fait, la façon de décrypter le ticket Ticketn et extrait la PTKn correspondant du terminal.
- Le point d'attachement lance la procédure « Group-key handshake » pour distribuer la « GTKn ».

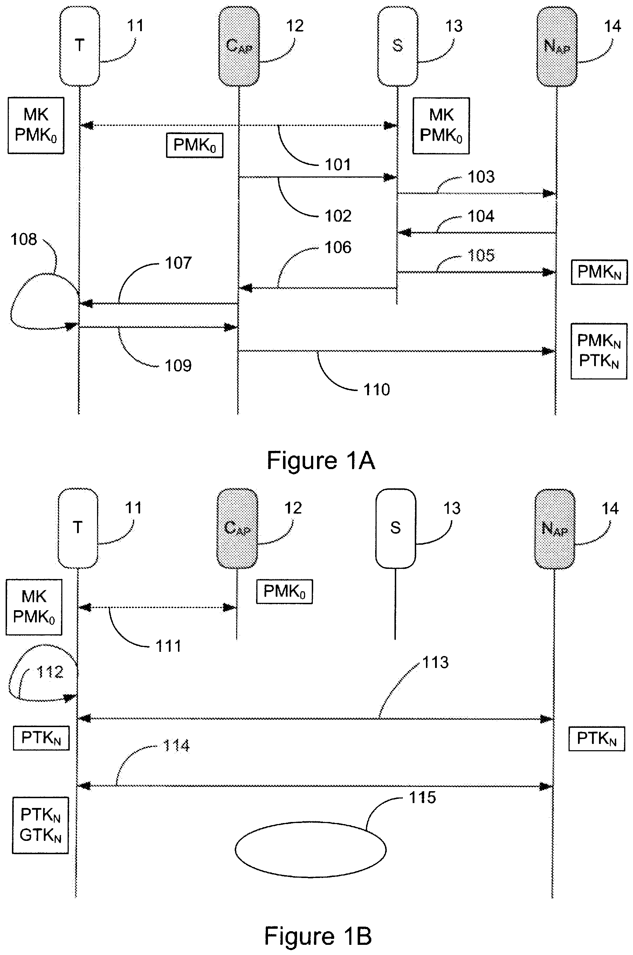

Les différentes étapes décrites sont illustrées avec les schémas des figures 1A et 1B.

La connexion d'un terminal au réseau est présentée par la figure 1A. Un terminal 11 se connecte à un point d'attachement courant 12. Préalablement à l'établissement de communication, le terminal 11 et un serveur d'authentification 13 réalisent (101) une authentification mutuelle permettant au serveur 13 et au terminal 11 de disposer des mêmes matériels d'authentification MK et PMK₀. La clé PMK₀ est également en possession du point d'attachement courant 12. Le point d'attachement courant 12 informe (102) le serveur d'authentification 13 que le terminal 11 est accepté sur le réseau par le point d'attachement courant 12. Le serveur d'authentification 13 va préparer une liste des points d'attachement voisins pour le point d'attachement courant. Dans la figure, un seul point d'attachement voisin 14 est représenté. Le serveur d'authentification 13 notifie (103) au point d'attachement 14 qu'un terminal 11 est accepté sur le réseau et demande si le point d'attachement 14 souhaite recevoir une clé pour ce terminal 11. Le point d'attachement voisin 14 transmet (104) son acceptation au serveur d'authentification 13 qui transmet (105) la clé d'authentification PMK_{N} au point d'attachement voisin 14.

Le serveur 13 transmet (106) au point d'attachement courant 12 une liste de points d'attachement voisins. Le point d'attachement courant 12 transmet (107) une liste des point d'attachement cibles potentiels au terminal 11 qui génère (108), pour chacun des points d'attachement cibles potentiels, un ticket de chiffrement crypté. La liste des tickets est ensuite transmise (109) au point d'attachement courant 12 qui transmet à son tour (110), pour chaque point d'attachement cible 14 de la liste (un seul dans l'exemple), le ticket crypté qui lui correspond, qui le décrypte et en extrait la « PTK » du terminal.

Par la suite, lors du déplacement du terminal 11 (figure 1B), le procédé de prédistribution décrit par l'intermédiaire de la figure 1A permet une association plus rapide du terminal. Une ancienne association 111 existe entre le terminal 11 et le point d'attachement courant 12. Le terminal 11 se déplace (112) vers le point d'attachement voisin 14. Une réassociation standard (113) est alors effectuée entre le terminal 11 et le point d'attachement voisin 14. Mais, à la différence des techniques de l'art antérieur, comme le point d'attachement voisin 14 possède déjà, par le procédé de l'invention, la « PTK » du terminal, il n'est pas nécessaire de recourir à la procédure « 4-ways HandShake » en vue d'obtenir cette clé. Le terminal 11 et le point d'attachement voisin débutent (114) donc directement la phase de « Group Key Handshake » préalablement à la transmission de données (115).

En d'autres termes, le procédé selon l'invention permet la distribution accélérée et sécurisée des clés de chiffrement temporaires (de type « PTK ») qui ont une contrainte de rafraîchissement plus forte que la contrainte de rafraîchissement du matériel d'authentification primaire (de type « PMK »).

Dans un mode de réalisation particulier de l'invention, particulièrement intéressante pour construire une solution de négociation préalable de paramètres contrôlée par le réseau d'un opérateur de communication, le ticket de chiffrement « Ticketn » est généré par le point d'attachement cible lui-même, à partir de « PTKn », elle-même construite à partir de « PMKn », « MN_id », « AP_id » et d'une valeur aléatoire, expression identique à celle utilisée par le terminal dans la solution décrite ci-dessus.

Le « MN_id » est déterminé par la réception d'une notification de « handover » imminent concernant le terminal correspondant. Cette notification peut être émise par le terminal lui-même ou une entité tierce (tel qu'un contrôleur de mobilité par exemple). Ce ticket de chiffrement crypté est ensuite envoyé par le point d'attachement cible au terminal via des liens sécurisés entre le point d'attachement cible et le point d'attachement courant d'une part et entre le point d'attachement courant et le terminal d'autre part.

Dans ce mode de réalisation, optionnellement, dès que le point d'attachement cible est notifié que le terminal va effectuer un « handover » vers sa cellule, le point d'attachement cible prépare la clé de chiffrement des trames diffusées (clé de groupe de type « GTKn ») correspondant à l'ensemble des stations associées et la maintient dans un cache en attendant que le terminal lui transmette une « association-req ». Dès que le terminal lui envoie une trame « association-req », le point d'attachement diffuse à l'ensemble des stations terminales attachées à sa cellule cette clé de groupe.

Dans un mode de réalisation complémentaire, optionnellement, il est possible d'introduire un contrôleur d'activation de la procédure de création de ticket, soit au niveau du terminal, soit au niveau du point d'attachement. Un tel contrôleur permet de confirmer un « handover » imminent du terminal vers le point d'attachement cible.

Dans un autre mode de réalisation, le point d'attachement courant et le point d'attachement cible peuvent être de technologies différentes (« WiFi », « WiMAX » par exemple).

Dans un autre mode de réalisation, le ticket peut comprendre des champs supplémentaires, non liés à la sécurité, indiquant le contexte de qualité de services à garantir au terminal, si le ticket est créé par le terminal lui-même, indiquant le contexte de qualité de services que peut offrir le point d'attachement cible, si le ticket est créé par le point d'attachement cible (classe de QoS, niveau de priorité...). Ceci permet alors de proposer des services supplémentaires après que la connexion ait été établie et de n'exploiter qu'un seul ticket pour transmettre plusieurs informations nécessaires à la réassociation, afin de minimiser la charge de la signalisation sur le lien radio.

Ainsi, dans la solution apportée par le procédé selon l'invention :
- L'authentification mutuelle entre le terminal et le point d'attachement cible est assurée par les procédés suivants :
   - En premier lieu, le terminal se base sur la relation de confiance qu'il a établi avec son point d'attachement courant pour envoyer le ticket et le point d'attachement cible se base sur la relation de confiance établie avec le point d'attachement courant pour accepter ce ticket. Donc la détention du ticket par le point d'attachement cible indique implicitement un transfert des relations de confiance à travers le point d'attachement courant. Cette confiance établie reste cependant insuffisante pour assurer pleinement l'authentification mutuelle ; elle est complétée par le procédé suivant :
   - Pour déchiffrer le contenu du ticket (c'est à dire la « PTK ») le point d'attachement cible a besoin de la « PMK » (ou autre matériel d'authentification). Lors de la réassociation, le point d'attachement cible entame un « Group Key Handshake » (c'est-à-dire une distribution de la « GTK ») en se basant sur la « PTK » et donc prouve à la station la connaissance de la « PMK » puisqu'il a réussi à déchiffrer le contenu du ticket. Par conséquent, l'authentification mutuelle est assurée par ce dernier échange entre le terminal et le point d'attachement.
- La « PTK » créée par le terminal reste valide tant que la « PMKn » connue du terminal et du point d'attachement cible est elle-même valide et que la durée de vie de la « PTK » n'est écoulée. Dans le cas contraire, le terminal doit rafraîchir la clé « PTK » et doit la transmettre au point d'attachement cible par le même procédé.
- Le fait d'utiliser la clé « PMK » pour chiffrer le ticket reste conforme à IEEE802.11i : en effet, celui-ci n'est envoyé qu'une seule fois et ne peut être considéré comme l'envoi d'un trafic de données requérant l'envoi de plusieurs trames MAC. Ainsi, à la différence des techniques de l'art antérieur, la solution proposée par l'invention est donc pleinement compatible avec les normes existantes.
- Dans un mode de réalisation particulier de l'invention, il est possible que la liste des points d'attachement cibles potentiels soient créée par une entité tierce permettant par exemple un meilleur contrôle de la liste par l'opérateur. Notamment la distribution d'information vers des points d'attachement cibles potentiels peut conduire au maintien d'information sur certains points d'attachement qui ne sera jamais utilisée. L'optimisation de la distribution est conditionnée par une bonne définition de la liste des points d'attachement cibles, par exemple, exploitation d'un graphe de voisinage mis à jour dynamiquement. Ce procédé sort du contexte de la description de la solution.

### 5.3 exemple de mise en œuvre

La mise en œuvre décrite par la suite consiste à offrir un service de téléphonie mobile sur WiFi dans un WLAN sécurisé déployé sur un campus.

### 5.3.1 contexte

Un campus universitaire est un espace étendu, composé de plusieurs bâtiments assez distants. Pour améliorer les performances de la logistique, il serait intéressant de permettre au personnel qui se déplace fréquemment d'être joignable.

Avec la généralisation de l'utilisation de la technologie WiFi, le déploiement de points d'attachements au sein d'un campus est devenu quasi généralisé. En effet, les points d'attachements sont déployés dans les salles de réunion, les bureaux, les amphithéâtres mais aussi dans les espaces moins conventionnels tels que : les restaurants universitaires, les espaces-détentes pour les étudiants ou même à l'extérieur des bâtiments. Ainsi, nous sommes en présence d'une couverture WiFi complète où les zones de couverture des points d'attachement se chevauchent.

Par conséquent, il peut être intéressant d'exploiter cet accès continu pour offrir un service de téléphonie basé sur la voix sur IP. On propose, dans ce mode de mise en œuvre de l'invention, de mettre en place un système de téléphonie mobile « WiFi » à destination des personnels du campus afin qu'ils soient joignables lors de leurs déplacements au sein du campus.

### 5.3.2 Architecture

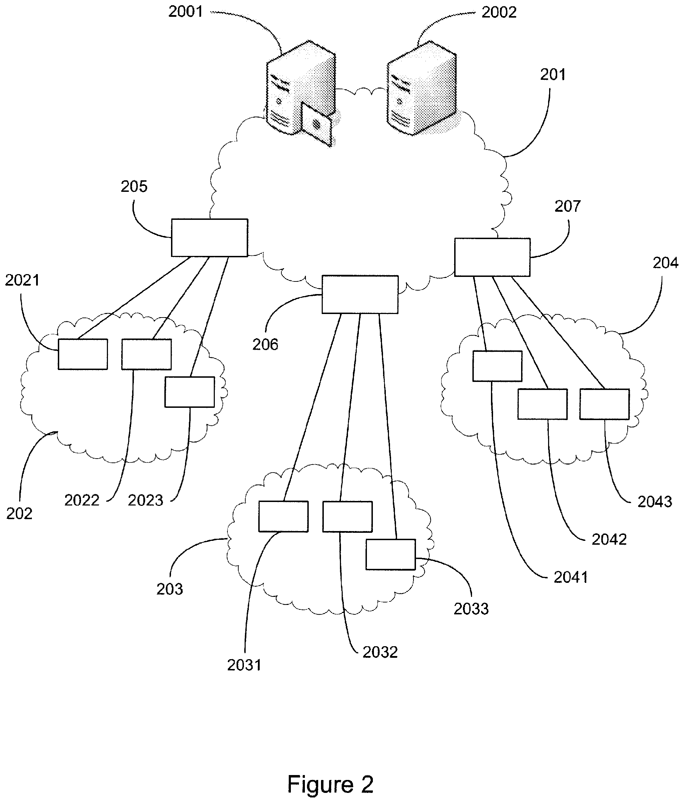

L'architecture du réseau du campus consiste en un ensemble de sous-réseaux reliés à travers des passerelles à un réseau de gestion qui regroupe les entités centrales de gestion comme les serveurs AAA, les serveurs d'application, tel que décrit en figure 2.

Un tel réseau comprend :
- un réseau de gestion de campus (201) qui comprend entre autres :
   ∘ un serveur AAA (2001) (de l'anglais « Authentication, Authorization, Accounting » pour « Authentification, Autorisation et Gestion de Comptes ») ;
   ∘ un ou plusieurs serveurs applicatifs (2002) ;
- des sous réseaux départementaux (202, 203, 204) reliés, par des moyens idoines (205, 206, 207) au réseau de gestion de campus (201) qui comprennent chacun des points d'attachements (2021, 2022, 2023, 2031, 2032, 2033, 2041, 2042, 2043),

Comme l'illustre la figure 2, les points d'attachements sont associés aux sous-réseaux auxquels ils permettent d'accéder.

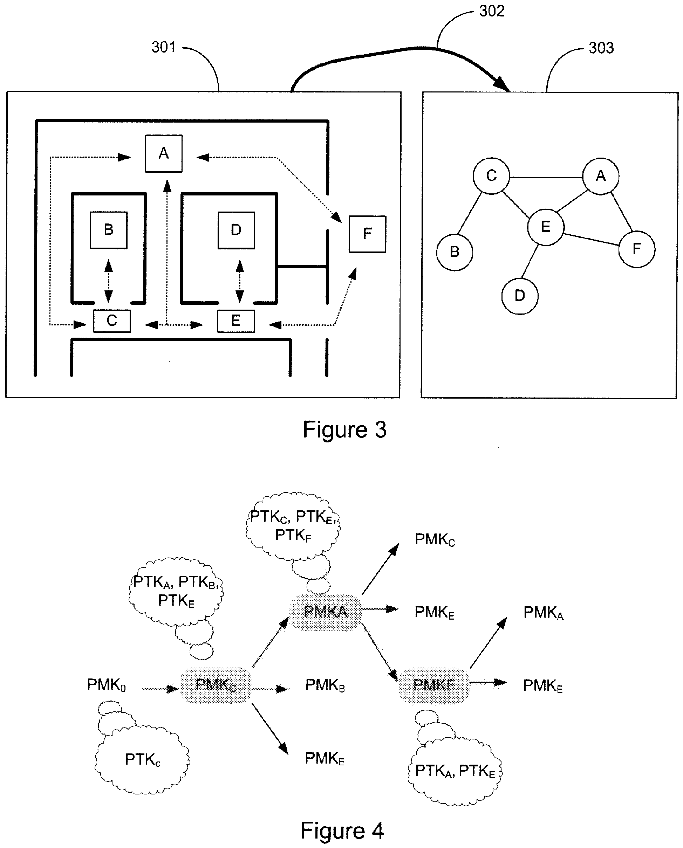

Dans ce mode de mise en œuvre, la méthode d'authentification rapide qui est directement dérivée du procédé de distribution selon l'invention se base sur une notion de voisinage entre points d'attachements pour limiter la prédistribution de clés lors de la phase de préauthentification. Le graphe de voisinage, défini par le mécanisme d'authentification rapide (figure 3), est géré par le serveur AAA (serveur d'authentification). De plus, ce même serveur est responsable de la distribution des clés « PMK » aux points d'attachements voisins lors de la phase de préauthentification. Ces deux fonctions affectées au serveur AAA sont prises en charge par sa fonction de gestion de compte (« Accounting »).

Ainsi, tel que cela est représenté par la figure 3, on suppose qu'un sous réseau 301, tel que décrit dans la figure 2 (202, 203, 204), par exemple situé dans un bâtiment déterminé, possède six points d'attachement (A, B, C, D, E et F). Par exemple, tel que cela est présenté par la figure 3, Le point d'attachement B est apte à entrer en communication avec le point C, qui est lui-même apte à communiquer avec A et E. Le serveur AAA établit ainsi (302) un graphe de voisinage (303) qui représente les possibilités de communication successives entre les points d'attachement.

Le protocole IAPP définit un mécanisme de sécurisation des communications entre points d'attachements à travers un serveur d'authentification centralisé. Dans ce mode de réalisation, le serveur AAA prend en charge cette fonction en utilisant le protocole RADIUS.

### 5.3.3 Scénario d'utilisation et diagramme d'échange

Nous présentons dans cette section un scénario d'utilisation qui se base sur l'architecture considérée préalablement et illustrée par la figure 3. On considère donc un exemple de déploiement de points d'attachements au sein d'un bâtiment ainsi que le graphe de voisinage correspondant.

La construction du graphe de voisinage se base sur les possibilités de déplacement des utilisateurs entre les points d'attachement et les chevauchements entre zones de couverture des points d'attachements.

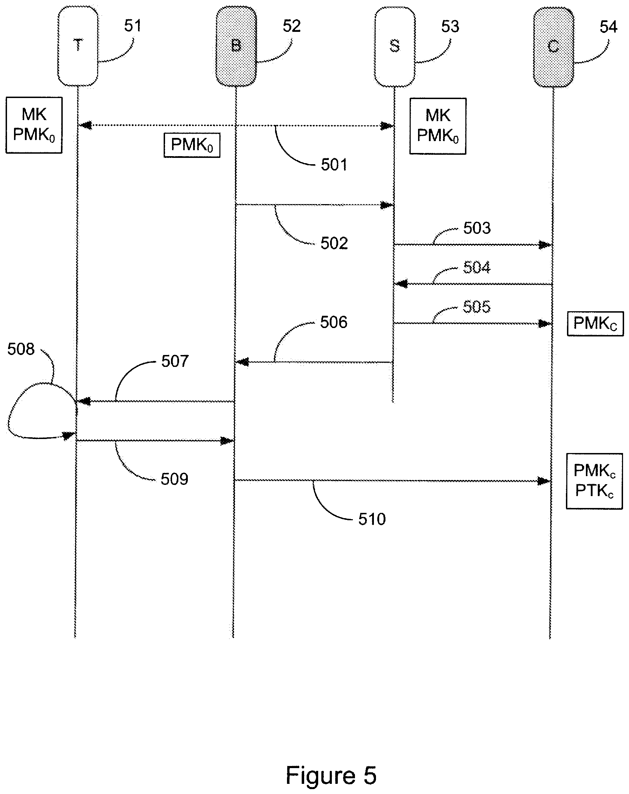

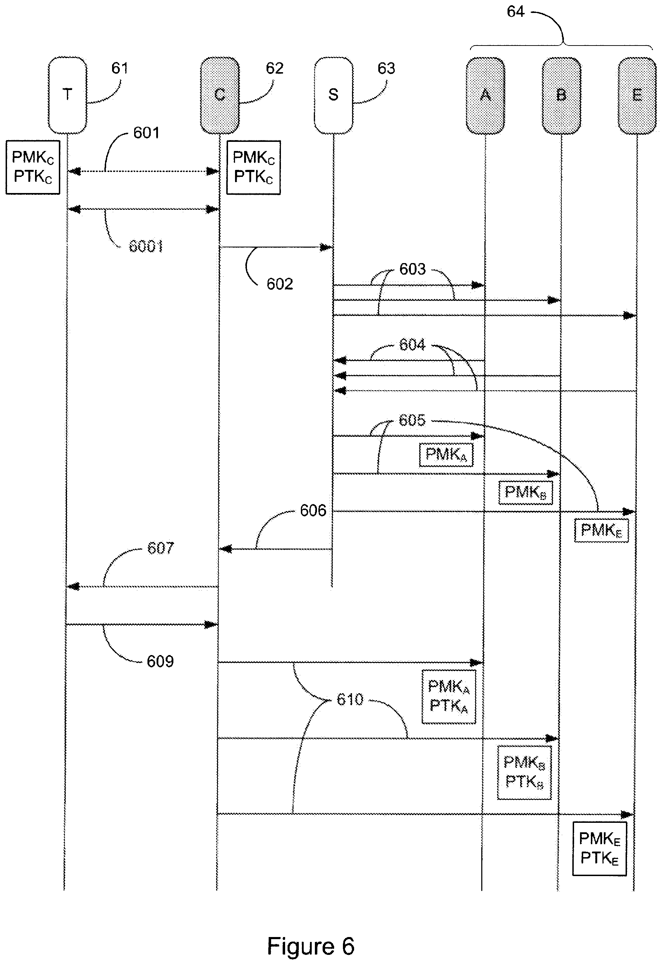

Dans la suite, on présente les diagrammes des échanges qui découlent du déplacement d'une station entre un certain nombre de points d'attachements (figure 5 et figure 6). On considère une station qui se déplace successivement entre les points d'attachements *B, C, A et F.*

Lors du premier attachement avec le réseau, le terminal mobile s'associe au point d'attachement B et effectue une authentification complète 802.11 qui résulte en une première clé PMK₀. À ce point, le serveur AAA détermine les voisins du point d'attachement B et entame la prédistribution des clés PMK. Par la suite, les déplacements successifs de la station entre les points d'attachements voisins donnent naissance à un arbre de clés PMKs. La figure 4 présente l'arbre correspondant à la séquence de déplacements considérés.

À chaque fois que la station se réassocie avec un point d'attachement voisin, elle calcule des clés PTK pour les points d'attachement de la nouvelle liste de voisinage. La figure 4 représente donc également les ensembles des clés PTK correspondant à chacune des clés PMK effectivement utilisées lors de l'exemple de déplacements.

Ainsi, lors de son premier attachement au point d'attachement B, le terminal mobile se voit attribuer une clé PMK₀. La méthode d'authentification préalable permet au terminal et au point d'attachement C d'être en possession d'une clé PMK_{C} préalablement au changement de point d'attachement. Une fois attaché au point C et conformément au graphe de la figure 3, la méthode d'authentification rapide réalise la création et l'échange des clés PMK_{A}, PMK_{B}, PMK_{E} conformément au graphe, respectivement avec les points d'attachement A, B et E. Ces créations et ces échanges de clés se produisent tout au long du déplacement du terminal,

Une fois que la phase d'authentification préalable est réalisée, le terminal effectue avec le point d'attachement cible un échange de la clé de chiffrement selon l'invention, qui lui évite la phase de ré-authentification par un « 4-way handshake ». Seuls le terminal et le point d'attachement cible auquel correspond un ticket peuvent décrypter le contenu de ce ticket. Le point d'attachement courant n'est considéré que comme un relais. Chaque ticket n'est décryptable que par le terminal et le point d'attachement auquel ce ticket correspond.

Pour assurer la prédistribution des clés, la méthode d'authentification rapide spécifie des échanges entre les différentes entités : terminal mobile, points d'attachement et serveur AAA. Nous présentons une partie de ces échanges pour l'exemple de déplacements choisi précédemment.

La figure 5 présente les échanges engendrés par le premier attachement de du terminal 51 avec le réseau à travers son association avec le point d'attachement 52. Ces échanges englobent une authentification standard 802.11i (501) avec le serveur d'authentification 53 ainsi que la prédistribution de clés PMK_{C} et PTK_{C} vers le point d'attachement voisin 54.

Une authentification standard est donc préalablement réalisée (501) qui conduit le terminal 51, le point d'attachement 52 et le serveur d'authentification 53 à partager la clé PMK₀. Le point d'attachement courant 52 est également en possession de la clé PMK₀. Le point d'attachement courant 52 informe (502) le serveur d'authentification 53 que le terminal 51 est accepté sur le réseau par le point d'attachement courant 52. Le serveur d'authentification 53 va préparer une liste des points d'attachement voisins pour le point d'attachement courant. Dans la figure, un seul point d'attachement voisin 54 est représenté. Le serveur d'authentification 53 notifie (503) qu'un terminal 51 est accepté sur le réseau et demande s'il souhaite recevoir une clé pour ce terminal 51. Le point d'attachement voisin 54 transmet (504) son acceptation au serveur d'authentification 53 qui transmet (505) la clé d'authentification PMK_{N} au point d'attachement voisin 54.

Le serveur 53 transmet (506) au point d'attachement courant 52 une liste de points d'attachement voisins. Le point d'attachement voisin 52 transmet (507) une liste des point d'attachement cibles potentiels au terminal 51 qui génère (508), pour chacun des points d'attachement cibles potentiels, un ticket de chiffrement crypté. La liste des tickets est ensuite transmise (509) au point d'attachement courant 52 qui transmet à son tour (510) *[IAPP-Cache-Notify(Ticket, Context)]* le ticket crypté au point d'attachement cible 54, qui le décrypte et en extrait la « PTK » du terminal. Le champ « Context » peut inclure plusieurs informations telles que l'identifiant du mobile, et de façon optionnelle son champ « RSN IE », son profil de Qualité de Service tel que cela a été indiqué au préalable.

La figure 6 schématise les échanges induits par un déplacement de la station dans le réseau et sa réassociation avec le point d'attachement C. La station se ré-authentifie avec C à travers un « Group key Handshake » (sans avoir besoin du « 4-way Handshake », selon l'invention) grâce aux clés prédistribuées (PMK_{C} et PTK_{C}) tel que cela a été décrit précédemment (figure 5). Cette réassociation engendre une nouvelle prédistribution de clés vers les voisins de C.

Une réassociation standard est donc préalablement réalisée (601) qui conduit le terminal 61, le point d'attachement 62 à partager la clé PMK_{c} et la PTK_{c}. Le point d'attachement courant 62 informe (602) le serveur d'authentification 63 que le terminal 61 est accepté sur le réseau par le point d'attachement courant 62. Le serveur d'authentification 63 va préparer une liste des points d'attachement voisins pour le point d'attachement courant. Dans la figure, trois points d'attachement voisins 64 sont représentés. Le serveur d'authentification 63 notifie (603) qu'un terminal 61 est accepté sur le réseau et demande s'il souhaite recevoir une clé pour ce terminal 61. Les points d'attachement voisins 64 transmettent (604) leurs acceptations au serveur d'authentification 63 qui transmet (605) la clé d'authentification PMK_{X} aux points d'attachement voisin 64.

Le serveur 63 transmet (606) au point d'attachement courant 62 une liste de points d'attachement voisins. Le point d'attachement courant 62 transmet (607) une liste des point d'attachement cibles potentiels au terminal 61 qui génère (608), pour chacun des points d'attachement cibles potentiels, un ticket de chiffrement crypté. La liste des tickets est ensuite transmise (609) au point d'attachement courant 62 qui transmet à son tour (610) *[IAPP-Cache-Notify(Ticket, Context])* le ticket crypté à chaque point d'attachement cible 64, qui le décrypte et en extrait la « PTK » du terminal.

### 5.4 structure d'un terminal et d'un contrôleur de mobilité

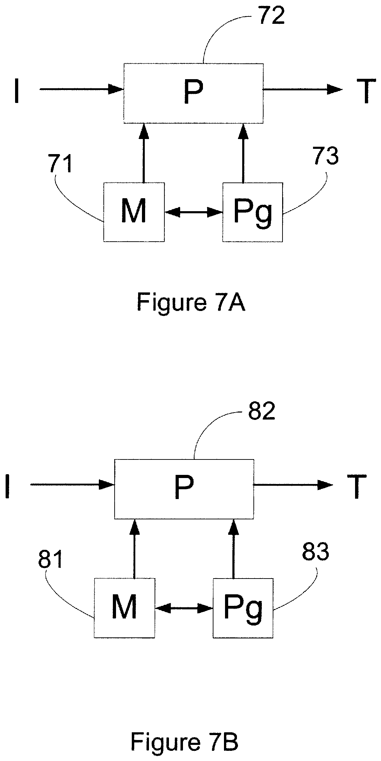

La figure 7A présente la structure simplifiée d'un point d'attachement, en ce qui concerne l'invention. Ce dernier comprend une mémoire M 71, une unité de traitement 72, équipée par exemple d'un microprocesseur, et pilotée par le programme d'ordinateur Pg 73. A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée les données 74 émises par les différents terminaux (par exemple au format illustré figure 3A). Le microprocesseur µP de l'unité de traitement 72 décode ces données 74, selon les instructions du programme Pg 73. L'unité de traitement 72 délivre en sortie des listes de points d'attachement cibles 75, destinés aux différents terminaux.

La figure 7B présente la structure simplifiée d'un terminal, en ce qui concerne l'invention. Ce dernier comprend une mémoire M 81, une unité de traitement 82, équipée par exemple d'un microprocesseur, et pilotée par le programme d'ordinateur Pg 83. A l'initialisation, les instructions de code du programme d'ordinateur 63 sont par exemple chargées dans une mémoire RAM avant d'être exécutées par le processeur de l'unité de traitement 82. L'unité de traitement 82 reçoit en entrée les données 84 émises par le point d'attachement courant (telles que les listes de points d'attachement cibles). Le microprocesseur µP de l'unité de traitement 82 décode ces données 84, selon les instructions du programme Pg 83. L'unité de traitement 82 délivre en sortie des tickets de chiffrement 85 (par exemple sous forme de liste), destinés au point d'attachement courant.

## Revendications

1. Procédé de distribution anticipée d'au moins une clé de chiffrement destinée à sécuriser une communication à établir sur la couche de liaison d'un réseau cellulaire formé d'une pluralité de cellules contrôlées chacune par un point d'attachement, entre un terminal mobile (11, 51, 61) et un ensemble de points d'attachement, dit points d'attachement cibles (14, 54, 64), comprenant les étapes suivantes mises en œuvre par au moins un point d'attachement cible :
- création (108, 508, 608) d'un ticket de chiffrement contenant une clé de chiffrement (PTKₙ), crypté à partir d'au moins une clé d'authentification (PMKₙ) propre à ce point d'attachement cible (14, 54, 64) et connue du terminal mobile ;
- transmission à destination dudit terminal mobile (11, 51, 61), et par le biais d'un point d'attachement courant (12, 52, 62) auquel ledit terminal mobile (11, 51, 61) est connecté, dudit ticket de chiffrement crypté;;
- ledit ticket de chiffrement comprenant en outre une première information représentative d'un identifiant dudit terminal.

2. Procédé de distribution selon la revendication 1, **caractérisé en ce qu'**il comprend en outre une étape identification, mise en œuvre par ledit terminal mobile, d'un moyen de décrypter ledit ticket de chiffrement crypté, à l'aide de ladite au moins une clé d'authentification (PMKₙ), permettant d'obtenir ladite clé de chiffrement (PTKₙ).

3. Procédé de distribution anticipée d'au moins une clé de chiffrement destinée à sécuriser une communication à établir sur la couche de liaison d'un réseau cellulaire formé d'une pluralité de cellules contrôlées chacune par un point d'attachement, entre un terminal mobile (11, 51, 61) et un ensemble de points d'attachement, dit points d'attachement cibles (14, 54, 64), comprenant les étapes suivantes mises en œuvre par ledit terminal mobile (11, 51, 61) :
- création (108, 508, 608) pour au moins un point d'attachement cible (14, 54, 64) d'un ticket de chiffrement contenant une clé de chiffrement (PTKₙ), crypté à partir d'au moins une clé d'authentification (PMKₙ) propre à ce point d'attachement cible (14, 54, 64) et connue du terminal mobile ;
- transmission à destination dudit point d'attachement cible (14, 54, 64), et par le biais d'un point d'attachement courant (12, 52, 62) auquel ledit terminal mobile (11, 51, 61) est connecté, dudit ticket de chiffrement crypté ; ledit ticket de chiffrement comprenant en outre une première information représentative d'un identifiant dudit terminal.

4. Procédé de distribution selon la revendication 3, **caractérisé en ce qu'**il comprend en outre une étape identification, mise en œuvre par ledit point d'attachement cible (14, 54, 64), d'un moyen de décrypter ledit ticket de chiffrement crypté, à l'aide de ladite au moins une clé d'authentification (PMKₙ), permettant d'obtenir ladite clé de chiffrement (PTKₙ).

5. Procédé de distribution selon la revendication 1 ou 3, **caractérisé en ce qu'**il comprend en outre une étape de stockage, par ledit point d'attachement cible, dudit ticket de chiffrement reçu, au sein d'un espace spécifique, selon un paramètre de conservation prédéterminé.

6. Procédé de distribution selon la revendication 5, **caractérisé en ce qu'**il comprend une étape préalable de détermination dudit ensemble de points d'attachements cibles par l'intermédiaire d'un graphe de voisinage associé audit réseau cellulaire.

7. Procédé de distribution selon la revendication 6, **caractérisé en ce qu'**il comprend en outre une étape préalable de transmission, pour chaque point d'attachement cible, d'une deuxième information représentative d'une possible mise en œuvre d'une procédure de « handover » à partir dudit terminal mobile.

8. Procédé de distribution selon la revendication 7, **caractérisé en ce que** ladite deuxième information comprend au moins une donnée appartenant au groupe comprenant :
- une identité dudit terminal ;
- une information représentative d'un matériel d'authentification propre audit terminal.

9. Procédé de distribution selon l'une quelconque des revendications 7 et 8, **caractérisé en ce qu'**il comprend une étape de sauvegarde temporaire de ladite deuxième information jusqu'à la mise en œuvre de ladite procédure de « handover ».

10. Procédé de distribution selon la revendication 9, **caractérisé en ce qu'**il comprend une étape de suppression de ladite deuxième information lorsqu'une durée limite de sauvegarde de ladite deuxième information est atteinte.

11. Système de distribution anticipée d'au moins une clé de chiffrement, le système comprenant des points d'attachement et la clé étant destinée à sécuriser une communication à établir sur la couche de liaison d'un réseau cellulaire formé d'une pluralité de cellules contrôlées chacune par un des points d'attachement entre un terminal mobile (11, 51, 61) et un ensemble des points d'attachement, dit points d'attachement cibles (14, 54, 64), comprenant les moyens suivants inclus au sein d'au moins un point d'attachement cible (14, 54, 64):
- des moyens de création (108, 508, 608) d'un ticket de chiffrement contenant une clé de chiffrement (PTKₙ), crypté à partir d'au moins une clé d'authentification (PMKₙ) propre à ce point d'attachement cible (14, 54, 64) et connue du terminal mobile ;
- des moyens de transmission à destination du terminal mobile (11, 51, 61), et par le biais d'un point d'attachement courant (12, 52, 62) auquel ledit terminal mobile (11, 51, 61) est connecté, dudit ticket de chiffrement crypté; ledit ticket de chiffrement comprenant en outre une première information représentative d'un identifiant dudit terminal.

12. Système de distribution anticipée d'au moins une clé de chiffrement selon la revendication 11 comprenant en outre des moyens d'identification d'un moyen de décrypter ledit ticket de chiffrement crypté, à l'aide de ladite au moins une clé d'authentification (PMKₙ), permettant d'obtenir ladite clé de chiffrement (PTKₙ) lesdits moyens d'identification étant mis en œuvre par ledit terminal mobile (11, 51, 61).

13. Système de distribution anticipée d'au moins une clé de chiffrement, le système comprenant des points d'attachement et la clé étant destinée à sécuriser une communication à établir sur la couche de liaison d'un réseau cellulaire formé d'une pluralité de cellules contrôlées chacune par un des points d'attachement entre un terminal mobile (11, 51, 61) et un ensemble des points d'attachement, dit points d'attachement cibles (14, 54, 64), comprenant les moyens suivants inclus au sein dudit terminal mobile (11, 51, 61) :
- des moyens de création (108, 508, 608) pour au moins un point d'attachement cible (14, 54, 64), d'un ticket de chiffrement contenant une clé de chiffrement (PTKₙ), crypté à partir d'au moins une clé d'authentification (PMKₙ) propre à ce point d'attachement cible (14, 54, 64) et connue du terminal mobile ;
- des moyens de transmission à destination du point d'attachement cible (14, 54, 64), et par le biais d'un point d'attachement courant (12, 52, 62) auquel ledit terminal mobile (11, 51, 61) est connecté, dudit ticket de chiffrement crypté; ledit ticket de chiffrement comprenant en outre une première information représentative d'un identifiant dudit terminal.

14. Système de distribution anticipée d'au moins une clé de chiffrement selon la revendication 13 comprenant en outre des moyens d'identification d'un moyen de décrypter ledit ticket de chiffrement crypté, à l'aide de ladite au moins une clé d'authentification (PMKₙ), permettant d'obtenir ladite clé de chiffrement (PTKₙ) lesdits moyens d'identification étant mis en œuvre par ledit point d'attachement cible (14, 54, 64).

15. Produit programme d'ordinateur téléchargeable depuis un réseau de communication et/ou stocké sur un support lisible par ordinateur et exécutable par un microprocesseur, **caractérisé en ce qu'**il comprend des instructions de code de programme qui quand elles sont exécutées par ledit microprocesseur mettent en œuvre le procédé de distribution selon l'une quelconque des revendications 1 ou 3.

## Patentansprüche

1. Verfahren zur vorweggenommenen Verteilung mindestens eines Verschlüsselungsschlüssels zum Sichern einer Kommunikation, die auf der Verbindungsschicht eines zellularen Netzes aufgebaut werden soll, das aus einer Vielzahl von Zellen besteht, die jeweils von einem Anbindungspunkt zwischen einem mobilen Endgerät (11, 51, 61) und einer Gruppe von Anbindungspunkten, die als Zielanbindungspunkte (14, 54, 64) bezeichnet werden, gesteuert werden, das die folgenden Schritte aufweist, die von mindestens einem Zielanbindungspunkt ausgeführt werden:
- Erstellen (108, 508, 608) eines Verschlüsselungstickets mit einem Verschlüsselungsschlüssel (PTKₙ), das ausgehend von mindestens einem Authentifizierungsschlüssel (PMKₙ) verschlüsselt wurde, der für diesen Zielanbindungspunkt (14, 54, 64) charakteristisch ist und dem mobilen Endgerät bekannt ist;
- Übertragen des verschlüsselten Verschlüsselungstickets mithilfe eines aktuellen Anbindungspunkts (12, 52, 62), mit dem das mobile Endgerät (11, 51, 61) verbunden ist, an das mobile Endgerät (11, 51, 61);
wobei das Verschlüsselungsticket darüber hinaus eine erste Information aufweist, die eine Kennung des Endgeräts darstellt.

2. Verfahren zur Verteilung nach Anspruch 1, **dadurch gekennzeichnet, dass** es darüber hinaus einen von dem mobilen Endgerät ausgeführten Schritt zum Identifizieren eines Mittels zum Entschlüsseln des verschlüsselten Verschlüsselungstickets mithilfe des mindestens einen Authentifizierungsschlüssels (PMKₙ) aufweist, um den Verschlüsselungsschlüssel (PTKₙ) zu erhalten.

3. Verfahren zur vorweggenommenen Verteilung mindestens eines Verschlüsselungsschlüssels zum Sichern einer Kommunikation, die auf der Verbindungsschicht eines zellularen Netzes aufgebaut werden soll, das aus einer Vielzahl von Zellen besteht, die jeweils von einem Anbindungspunkt zwischen einem mobilen Endgerät (11, 51, 61) und einer Gruppe von Anbindungspunkten, die als Zielanbindungspunkte (14, 54, 64) bezeichnet werden, gesteuert werden, das die folgenden Schritte aufweist, die von dem mobilen Endgerät (11, 51, 61) ausgeführt werden:
- Erstellen (108, 508, 608) eines Verschlüsselungstickets mit einem Verschlüsselungsschlüssel (PTKₙ), das ausgehend von mindestens einem Authentifizierungsschlüssel (PMKₙ) verschlüsselt wurde, der für diesen Zielanbindungspunkt (14, 54, 64) charakteristisch ist und dem mobilen Endgerät bekannt ist, für mindestens einen Zielanbindungspunkt (14, 54, 64);
- Übertragen des verschlüsselten Verschlüsselungstickets mithilfe eines aktuellen Anbindungspunkts (12, 52, 62), mit dem das mobile Endgerät (11, 51, 61) verbunden ist, an den Zielanbindungspunkt (14, 54, 64);
wobei das Verschlüsselungsticket darüber hinaus eine erste Information aufweist, die eine Kennung des Endgeräts darstellt.

4. Verfahren zur Verteilung nach Anspruch 3, **dadurch gekennzeichnet, dass** es darüber hinaus einen von dem Zielanbindungspunkt (14, 54, 64) ausgeführten Schritt zum Identifizieren eines Mittels zum Entschlüsseln des verschlüsselten Verschlüsselungstickets mithilfe des mindestens einen Authentifizierungsschlüssels (PMKₙ) aufweist, um den Verschlüsselungsschlüssel (PTKₙ) zu erhalten.

5. Verfahren zur Verteilung nach Anspruch 1 oder 3, **dadurch gekennzeichnet, dass** es darüber hinaus einen Schritt zum Speichern des empfangenen Verschlüsselungstickets innerhalb eines bestimmten Raums gemäß einem vorbestimmten Erhaltungsparameter durch den Zielanbindungspunkt aufweist.

6. Verfahren zur Verteilung nach Anspruch 5, **dadurch gekennzeichnet, dass** es einen vorausgehenden Schritt zum Bestimmen der Gruppe von Zielanbindungspunkten über einen dem zellularen Netz zugeordneten Nachbarschaftsgraphen aufweist.

7. Verfahren zur Verteilung nach Anspruch 6, **dadurch gekennzeichnet, dass** es darüber hinaus einen vorausgehenden Schritt zum Übertragen einer zweiten Information aufweist, die eine mögliche Ausführung eines "Handover"-Verfahrens ausgehend von dem Endgerät für jeden Zielanbindungspunkt darstellt.

8. Verfahren zur Verteilung nach Anspruch 7, **dadurch gekennzeichnet, dass** die zweite Information mindestens ein Datenelement aufweist, das zu der Gruppe gehört, die Folgendes aufweist:
- eine Identität des Endgeräts;
- eine Information, die einer für das Endgerät charakteristischen Authentifizierungshardware entspricht.

9. Verfahren zur Verteilung nach einem der Ansprüche 7 und 8, **dadurch gekennzeichnet, dass** es einen Schritt zum vorläufigen Sichern der zweiten Information bis zur Ausführung des "Handover"-Verfahrens aufweist.

10. Verfahren zur Verteilung nach Anspruch 9, **dadurch gekennzeichnet, dass** es einen Schritt zum Löschen der zweiten Information aufweist, wenn ein Grenzwert für die Dauer der Sicherung der zweiten Information erreicht ist.

11. System zur vorweggenommenen Verteilung mindestens eines Verschlüsselungsschlüssels, wobei das System Anbindungspunkte aufweist und der Schlüssel zum Sichern einer Kommunikation dient, die auf der Verbindungsschicht eines zellularen Netzes aufgebaut werden soll, das aus einer Vielzahl von Zellen besteht, die jeweils von einem der Anbindungspunkte zwischen einem mobilen Endgerät (11, 51, 61) und einer Gruppe von Anbindungspunkten, die als Zielanbindungspunkte (14, 54, 64) bezeichnet werden, gesteuert werden, das die folgenden Mittel aufweist, die in mindestens einem Zielanbindungspunkt (14, 54, 64) enthalten sind:
- Mittel zum Erstellen (108, 508, 608) eines Verschlüsselungstickets mit einem Verschlüsselungsschlüssel (PTKₙ), das ausgehend von mindestens einem Authentifizierungsschlüssel (PMKₙ) verschlüsselt wurde, der für diesen Zielanbindungspunkt (14, 54, 64) charakteristisch ist und dem mobilen Endgerät bekannt ist;
- Mittel zum Übertragen des verschlüsselten Verschlüsselungstickets mithilfe eines aktuellen Anbindungspunkts (12, 52, 62), mit dem das mobile Endgerät (11, 51, 61) verbunden ist, an das mobile Endgerät (11, 51, 61);
wobei das Verschlüsselungsticket darüber hinaus eine erste Information aufweist, die eine Kennung des Endgeräts darstellt.

12. System zur vorweggenommenen Verteilung mindestens eines Verschlüsselungsschlüssels nach Anspruch 11, das darüber hinaus Mittel zum Identifizieren eines Mittels zum Entschlüsseln des verschlüsselten Verschlüsselungstickets mithilfe des mindestens einen Authentifizierungsschlüssels (PMKₙ) aufweist, um den Verschlüsselungsschlüssel (PTKₙ) zu erhalten, wobei die Mittel zum Identifizieren von dem mobilen Endgerät (11, 51, 61) ausgeführt werden.

13. System zur vorweggenommenen Verteilung mindestens eines Verschlüsselungsschlüssels, wobei das System Anbindungspunkte aufweist und der Schlüssel zum Sichern einer Kommunikation dient, die auf der Verbindungsschicht eines zellularen Netzes aufgebaut werden soll, das aus einer Vielzahl von Zellen besteht, die jeweils von einem der Anbindungspunkte zwischen einem mobilen Endgerät (11, 51, 61) und einer Gruppe von Anbindungspunkten, die als Zielanbindungspunkte (14, 54, 64) bezeichnet werden, gesteuert werden, das die folgenden Mittel aufweist, die in dem mobilen Endgerät (11, 51, 61) enthalten sind:
- Mittel zum Erstellen (108, 508, 608) eines Verschlüsselungstickets mit einem Verschlüsselungsschlüssel (PTKₙ), das ausgehend von mindestens einem Authentifizierungsschlüssel (PMKₙ) verschlüsselt wurde, der für diesen Zielanbindungspunkt (14, 54, 64) charakteristisch ist und dem mobilen Endgerät bekannt ist, für mindestens einen Zielanbindungspunkt (14, 54, 64) ;
- Mittel zum Übertragen des verschlüsselten Verschlüsselungstickets mithilfe eines aktuellen Anbindungspunkts (12, 52, 62), mit dem das mobile Endgerät (11, 51, 61) verbunden ist, an den Zielanbindungspunkt (14, 54, 64);
wobei das Verschlüsselungsticket darüber hinaus eine erste Information aufweist, die eine Kennung des Endgeräts darstellt.

14. System zur vorweggenommenen Verteilung mindestens eines Verschlüsselungsschlüssels nach Anspruch 13, das darüber hinaus Mittel zum Identifizieren eines Mittels zum Entschlüsseln des verschlüsselten Verschlüsselungstickets mithilfe des mindestens einen Authentifizierungsschlüssels (PMKₙ) aufweist, um den Verschlüsselungsschlüssel (PTKₙ) zu erhalten, wobei die Mittel zum Identifizieren von dem Zielanbindungspunkt (14, 54, 64) ausgeführt werden.

15. Computerprogrammprodukt, das aus einem Kommunikationsnetz herunterladbar ist und/oder auf einem computerlesbaren Medium gespeichert ist und von einem Mikroprozessor ausführbar ist, **dadurch gekennzeichnet, dass** es Programmcodeanweisungen aufweist, die bei ihrer Ausführung durch den Mikroprozessor das Verfahren zur Verteilung nach einem der Ansprüche 1 oder 3 ausführen.

## Claims

1. Method for the early distribution of at least one encryption key intended to secure communication to be set up on the link layer of a cellular network formed of a plurality of cells each supervised by an attachment point, between a mobile terminal (11, 51, 61) and a set of attachment points, called target attachment points (14, 54, 64), comprising the following steps implemented by at least one target attachment point:
- creating (108, 508, 608) an encryption ticket containing an encryption key (PTKₙ), encrypted based on at least one authentication key (PMKₙ) specific to this target attachment point (14, 54, 64) and known to the mobile terminal;
- transmitting said encrypted encryption ticket to said mobile terminal (11, 51, 61) and by way of a current attachment point (12, 52, 62) to which said mobile terminal (11, 51, 61) is connected;
- said encryption ticket furthermore comprising first information representative of an identifier of said terminal.

2. Distribution method according to Claim 1, **characterized in that** it furthermore comprises a step, implemented by said mobile terminal, of identifying a means for decrypting said encrypted encryption ticket, using said at least one authentication key (PMKₙ), in order to obtain said encryption key (PTKₙ).

3. Method for the early distribution of at least one encryption key intended to secure communication to be set up on the link layer of a cellular network formed of a plurality of cells each supervised by an attachment point, between a mobile terminal (11, 51, 61) and a set of attachment points, called target attachment points (14, 54, 64), comprising the following steps implemented by said mobile terminal (11, 51, 61):
- creating (108, 508, 608), for at least one target attachment point (14, 54, 64), an encryption ticket containing an encryption key (PTKₙ), encrypted based on at least one authentication key (PMKₙ) specific to this target attachment point (14, 54, 64) and known to the mobile terminal;
- transmitting said encrypted encryption ticket to said target attachment point (14, 54, 64) and by way of a current attachment point (12, 52, 62) to which said mobile terminal (11, 51, 61) is connected;
said encryption ticket furthermore comprising first information representative of an identifier of said terminal.

4. Distribution method according to Claim 3, **characterized in that** it furthermore comprises a step, implemented by said target attachment point (14, 54, 64), of identifying a means for decrypting said encrypted encryption ticket, using said at least one authentication key (PMKₙ), in order to obtain said encryption key (PTKₙ).

5. Distribution method according to Claim 1 or 3, **characterized in that** it furthermore comprises a step of storage, by said target attachment point, of said received encryption ticket within a specific space depending on a predetermined conservation parameter.

6. Distribution method according to Claim 5, **characterized in that** it comprises a preliminary step of determining said set of target attachment points by way of a neighbourhood graph associated with said cellular network.

7. Distribution method according to Claim 6, **characterized in that** it furthermore comprises a preliminary step of transmitting, for each target attachment point, second information representative of a possible implementation of a handover procedure based on said mobile terminal.

8. Distribution method according to Claim 7, **characterized in that** said second information comprises at least one item of data belonging to the group comprising:
- an identity of said terminal;
- information representative of authentication means specific to said terminal.

9. Distribution method according to either one of Claims 7 and 8, **characterized in that** it comprises a step of temporarily saving said second information until said handover procedure is implemented.

10. Distribution method according to Claim 9, **characterized in that** it comprises a step of deleting said second information when a limit duration for saving said second information is reached.

11. System for the early distribution of at least one encryption key, the system comprising attachment points and the key being intended to secure communication to be set up on the link layer of a cellular network formed of a plurality of cells each supervised by one of the attachment points between a mobile terminal (11, 51, 61) and a set of attachment points, called target attachment points (14, 54, 64), comprising the following means contained within at least one target attachment point (14, 54, 64):
- means for creating (108, 508, 608) an encryption ticket containing an encryption key (PTKₙ), encrypted based on at least one authentication key (PMKₙ) specific to this target attachment point (14, 54, 64) and known to the mobile terminal;
- means for transmitting said encrypted encryption ticket to the mobile terminal (11, 51, 61) and by way of a current attachment point (12, 52, 62) to which said mobile terminal (11, 51, 61) is connected;
said encryption ticket furthermore comprising first information representative of an identifier of said terminal.

12. System for the early distribution of at least one encryption key according to Claim 11, furthermore comprising means for identifying a means for decrypting said encrypted encryption ticket, using said at least one authentication key (PMKₙ), in order to obtain said encryption key (PTKₙ), said identification means being implemented by said mobile terminal (11, 51, 61).

13. System for the early distribution of at least one encryption key, the system comprising attachment points and the key being intended to secure communication to be set up on the link layer of a cellular network formed of a plurality of cells each supervised by one of the attachment points between a mobile terminal (11, 51, 61) and a set of attachment points, called target attachment points (14, 54, 64), comprising the following means contained within said mobile terminal (11, 51, 61):
- means for creating (108, 508, 608), for at least one target attachment point (14, 54, 64), an encryption ticket containing an encryption key (PTKₙ), encrypted based on at least one authentication key (PMKₙ) specific to this target attachment point (14, 54, 64) and known to the mobile terminal;
- means for transmitting said encrypted encryption ticket to the target attachment point (14, 54, 64) and by way of a current attachment point (12, 52, 62) to which said mobile terminal (11, 51, 61) is connected;
said encryption ticket furthermore comprising first information representative of an identifier of said terminal.

14. System for the early distribution of at least one encryption key according to Claim 13, furthermore comprising means for identifying a means for decrypting said encrypted encryption ticket, using said at least one authentication key (PMKₙ), in order to obtain said encryption key (PTKₙ), said identification means being implemented by said target attachment point (14, 54, 64) .

15. Computer program product able to be downloaded from a communication network and/or stored on a computer-readable support and able to be executed by a microprocessor, **characterized in that** it comprises program code instructions that, when they are executed by said microprocessor, implement the distribution method according to either one of Claims 1 and 3.
